## Europäisches Patentamt

## European Patent Office

## Office européen des brevets

(19)

(11) Veröffentlichungsnummer: **0 137 917**
**B1**

(12)

# EUROPÄISCHE PATENTSCHRIFT

(45) Veröffentlichungstag der Patentschrift: 02.09.87

(21) Anmeldenummer: **84107970.0**

(22) Anmeldetag: **07.07.84**

(51) Int. Cl.⁴: **F 16 B  12/10**

(54) **Eckverbinder für Platten, insbesondere Möbelplatten.**

(30) Priorität: **25.08.83  DE 3330584**
**21.12.83  DE 3346067**

(43) Veröffentlichungstag der Anmeldung:
**24.04.85 Patentblatt 85/17**

(45) Bekanntmachung des Hinweises auf die Patenterteilung:
**02.09.87 Patentblatt 87/36**

(84) Benannte Vertragsstaaten:
**AT BE CH FR GB IT LI NL SE**

(56) Entgegenhaltungen:
**EP-A-0 006 744**
**AT-B-268 594**
**CH-A-606 828**
**DD-A-125 985**
**DD-A-144 946**
**FR-A-2 094 231**

(73) Patentinhaber: **Häfele KG, Postfach 160**
**Freudenstädter Strasse 74, D-7270 Nagold (DE)**

(72) Erfinder: **Erlebach, Gustav, Achalmstrasse 33,**
**D-7030 Böblingen (DE)**
Erfinder: **Hölze, Roland, Rathausgasse 1, D-7274**
**Oberschwandorf (DE)**
Erfinder: **Koch, Gerhard, Bondorfer Weg 28, D-7270**
**Nagold (DE)**

(74) Vertreter: **Patentanwälte Dipl.- Ing. B. Schmid Dr.-**
**Ing. G.A. Birn Dipl.- Ing. H. Quarder,**
**Falbenhennenstrasse 17, D-7000 Stuttgart 1 (DE)**

EP 0 137 917 B1

LIBER, STOCKHOLM 1987

**Beschreibung**

Die Erfindung bezieht sich auf einen Eckverbinder für zwei im Winkel zueinander angeordnete, an ihren einander zugeordneten Kanten auf Gehrung gearbeitete Platten, bestehend aus einem abgewinkelten Bolzen mit an seinen Enden angebrachten Haltemitteln für die Platten. Ein derartiger Eckeverbinder ist durch die AT-B-268 594 bekannt geworden. Auf Gehrung gearbeitete Eckverbindungen von Platten wendet man bei Gütern höheren Bedarfs an. Durch die Gehrung sind die Kanten stark geschwächt und es muß daher bei erhöhter Beanspruchung ein Ausbrechen des Materials im Eckbereich befürchtet werden. Man ist deshalb dazu übergegangen, einen Eckverbinder der eingangs beschriebenen Art zu verwenden, jedoch hat sich gezeigt, daß bei den bekannten Ausführungsformen ein paßgenaues Zusammensetzen, insbesondere bei lösbaren Verbindungen, nicht erreicht werden kann.

Die Erfindung betrifft des weiteren auch einen Eckverbinder für zwei im Winkel zueinander angeordnete, an ihren einander zugeordneten Kanten auf Gehrung gearbeiteten Platten, bestehend aus einem abgewinkelten Bolzen mit an seinen Enden angebrachten Haltemitteln für die Platten, wobei die beiden Bolzenhälften über ein Drehgelenk miteinander verbunden sind und sich die Drehachse quer zu den Längsachsen der Bolzenschäfte erstreckt. Ein derartiger Eckverbinder ist durch die FR-A-2 094 231 bekannt geworden. Diese Druckschrift betrifft an sich einen Eckverbinder für ein Geländer, jedoch könnte sie möglicherweise auch bei der Verbindung zweier Platten eingesetzt werden. Der Vorteil dieses Eckverbinders liegt in der Einstellbarkeit des von den beiden Bolzenschäften eingeschlossenen Winkels und dadurch eine Anpassung an den Winkel, welchen die beiden Platten bilden sollen. Weil aber auch letztere auf Gehrung gearbeitet werden, ergibt sich die vorstehend genannte Schwierigkeit auch bei der Verwendung dieses Eckverbinders.

Die Aufgabe der Erfindung wird infolgedessen darin gesehen, einen Eckverbinder nach dem Oberbegriff des Anspruchs 1 oder 2 so weiterzubilden, daß ein genaues Aneinanderliegen der auf Gehrung gearbeiteten Plattenkanten gewährleistet ist und insbesondere, daß die Eckverbindung der beiden Platten auch nach mehrmaligem Lösen wieder einwandfrei möglich ist.

Zur Lösung dieser Aufgabe wird erfindungsgemäß vorgeschlagen, daß der Eckverbinder nach dem Oberbegriff des Anspruchs 1 entsprechend dem kennzeichnenden Teil dieses Anspruchs ausgebildet ist.

Zur Lösung der gestellten Aufgabe wird des weiteren erfindungsgemäß vorgeschlagen, daß der Eckverbinder nach dem Oberbegriff des Anspruchs 2 entsprechend dem kennzeichnenden Teil dieses Anspruchs ausgebildet ist. Beide Eckverbinder kennzeichnen sich dadurch, daß ihr Eckbereich mindestens einen Anschlag auiweist. Man kann nunmehr den einen Bolzenschaft in eine entsprechende Bohrung der einen Platte einschieben, bis der Anschlag an der Gehrungskante dieser Platte anliegt. Dadurch ist eine genaue Lage des anderen Bolzenschafts gewährleistet. Beim Aufschieben der anderen Platte erreicht man forderungsgemäß ein paßgerechtes Aneinanderliegen der beiden Gehrungskanten. Bei der bevorzugten Verwendung in Verbindung mit Möbelplatten kann sich der Anschlag in das Plattenmaterial eingraben und dies führt zu einer ausgezeichneten Drehsicherung.

Aufgrund der stufenlosen Verstellmöglichkeit der beiden Bolzenschäfte ist dieser Eckverbinder in einem Bereich von 90° bis 180° ganz universell für jeden vorkommenden Gehrungswinkel zwischen den beiden Platten brauchbar.

Eine Weiterbildung der Erfindung sieht vor, daß der Anschlag in einem dem Gehrungswinkel der Platten entsprechenden Winkel zu den Bolzenschäften angeordnet ist, wodurch das satte und genaue Anliegen der Gehrungskanten noch besser gewährleistet wird.

Der Anschlag kann den Eckverbinder gemäß einer weiteren Ausgestaltung der Erfindung im Eckbereich ringförmig umgeben oder sternförmig ausgebildet sein. Die Sternform hat den Vorteil, daß sich die einzelnen Zacken noch besser in das Material eingraben können. Die Zacken sind vorzugsweise lanzenspitzenförmig mit konvexen Breitflächen ausgebildet.

Um beim Einschieben der Bolzenenden eine Zentrierung der Bolzenschäfte in der Platte zu erreichen, verjüngen sich die Bolzenschäfte vom Eckbereich ausgehend nach beiden Seiten hin. Die Bolzenenden können unterschiedlich ausgebildet sein, je nach Art der gewünschten Verbindung. Entweder kann man das Ende mindestens eines Bolzenschafts als Einschlagschaft mit Widerhaken gestalten oder aber einen insbesondere in ein Innengewinde eingeschraubten Anzugskopf vorsehen.

Eine Weiterbildung der Erfindung sieht vor, daß die beiden Enden der Drehachse die Bolzenschäfte überragen und die überstehenden Bolzenenden jeweils als Anschlag im Eckbereich ausgebildet sind. Dadurch läßt sich die Drehachse für die beiden Bolzenschäfte in doppelter Weise ausnutzen. Nachdem auch diese Anschläge eine gewisse Dicke haben, können sie sich wie der Anschlag der ersten Ausführungsform beim Zusammenziehen der Gehrungsverbindung beidseitig etwas in das Material eingraben.

Gemäß einer besonders bevorzugten Ausführungsform der Erfindung sind die beiden Enden der Drehachse plattenförmig gestaltet, wodurch man eine genügend große Anlagefläche erhält.

Außerdem ist in vorteilhafter, aber bekannter Weise vorgesehen, daß der eine Bolzenschaft eine mittige innere Lageröse und der andere zwei im Abstand voneinander angeordnete äußere Lagerösen aufweist, deren Abstand der Dicke der inneren Lageröse entspricht. Es entsteht somit ein herkömmliches, einfach aufgebautes und robustes Drehgelenk. Wenn man die beiden Enden der Drehachse erst nach dem Herstellen dieser Gelenkverbindung zusammenpreßt, um dadurch die plattenförmigen Anschläge zu schaffen, so erhält man automatisch auch eine Sicherung der Gelenkverbindung, weil die zusammengepreßten Enden breiter sind als der Durchmesser des Materials der Lagerachse. Der zweckmäßigen Formgebung ist demnach eine problemlose und einfache Fertigungsmethode zugeordnet. In diesem Falle sind natürlich die Lagerösen an ihren Schaft einstückig angeformt.

Die Zeichnung zeigt zwei Ausführungsbeispiele der Erfindung. Es stellen dar:

Fig. 1 einen abgebrochenen Querschnitt zweier rechtwinklig zueinander stehender, im Eck verbundener Platten mit einem teilweise geschnittenen Eckverbinder einer ersten Ausführungsform,

Fig. 2 in vergrößertem Maßstab einen Querschnitt dieses Eckverbinders im Eckbereich,

Fig. 3 die abgebrochene Ansicht der Fig. 2 in Pfeilrichtung "III",

Fig. 4 der Eckverbinder gemäß der zweiten Ausführungsform in seiner gestreckten Lage bei senkrecht zur Bildebene verlaufender Gelenkachse,

Fig. 5 eine dementsprechende Darstellung in einer um 90° gedrehten Stellung,

Fig. 6 ein Detail der Fig. 5 in Pfeilrichtung VI gesehen,

Fign. 7 u. 8 zwei Einbaubeispiele für den Eckverbinder der Fign. 4 bis 6 mit unterschiedlichen Gehrungswinkeln.

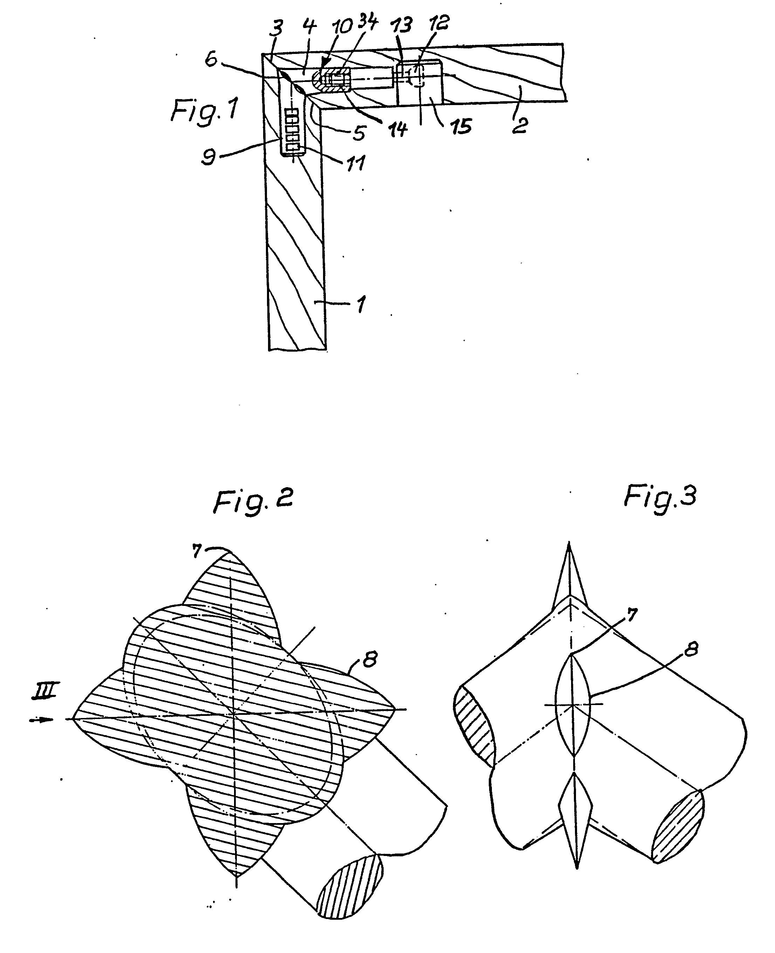

Die Platten 1 und 2 weisen auf Gehrung geschnittene, aneinander anliegende Kanten 3 und 5 auf. Die Verbindung der beiden Platten 1, 2 wird durch einen Eckverbinder 4 gesichert, der als abgewinkelter Bolzen ausgebildet ist. Im Eckbereich weist der Eckverbinder 4 einen sternförmögen Anschlag 6 auf, welcher im gleichen Winkel wie die Gehrungskante 3, 5 angeordnet ist, so daß der Anschlag 6 an den Gehrungskanten 3, 5 zu liegen kommt. Wie die Fig. 2 u. 3 erkennen lassen, sind die einzelnen Zacken 7 des sternförmigen Anschlages 6 lanzenspitzenförmig ausgebildet, wobei die Breitflächen 8 konvex gestaltet sind. Auf diese Weise können sich die einzelnen Zacken 7 besonders gut in das Material der Platten 1, 2 eingraben.

Die beiden Bolzenschäfte 9 und 10 verjüngen sich vom Eckbereich aus gesehen zu ihrem freien Ende hin. Die Enden können dabei unterschiedlich geformt sein. Der Bolzenschaft 9 ist mit Widerhaken 11 versehen und auf diese Weise als Einschlagschaft ausgebildet. Dagegen befindet sich am Ende des Bolzenschafts 10 ein Anzugskopf 12, welcher an einem Schaftteil 1, 3 angeordnet ist. Der Schaftteil 13 ist mit dem Innengewinde 14 des Schaftteils 34 verschraubt. Das Anziehen des Anzugskopfes 12 erfolgt durch ein Spannelement 15 üblicher Bauart, dessen Funktion nicht weiter dargestellt ist.

Bei der Montage der Platten 1, 2 werden zunächst entsprechende Bohrungen für die Bolzenschäfte 9 und 10 vorgenommen und anschließend der Bolzenschaft 9 in die Platte 1 eingeschlagen. Durch die konische Gestaltung wird dabei eine einwandfreie Zentrierung erreicht, die Voraussetzung dafür ist, daß die Gehrungskanten 3, 5 genau aufeinander zu liegen kommen. Daraufhin wird die Platte 2 auf den Bolzenschaft 10 aufgeschoben, wobei ebenfalls wiederum eine Zentrierung durch die konische Gestaltung erfolgt. Anschließend wird dann der Anzugskopf 12 durch das eingesetzte Spannelement 15 angezogen, so daß eine feste und sichere Verbindung der Platten 1 und 2 erreicht wird.

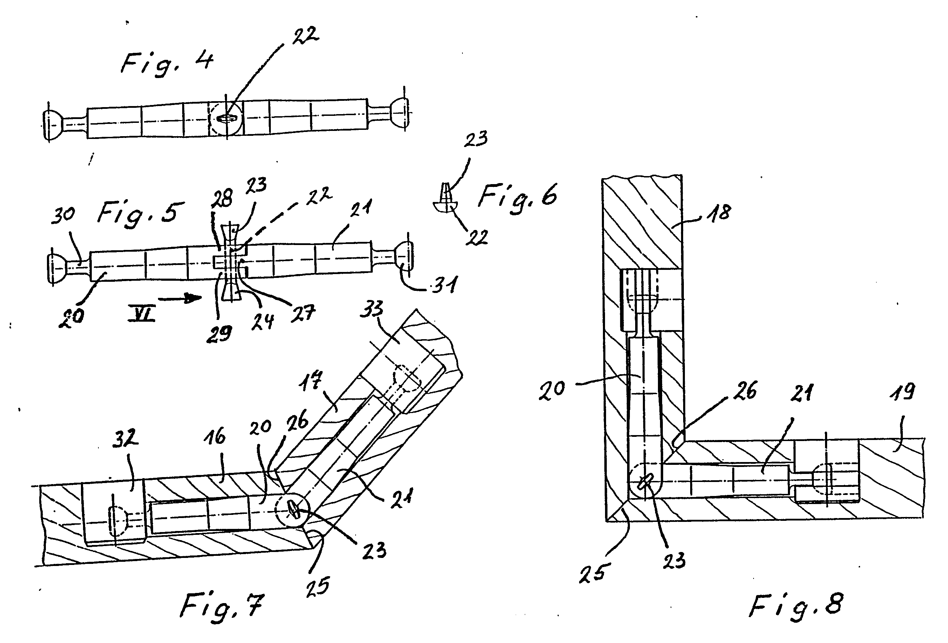

Die beiden durch Eckverbinder gemäß Fig. 4 verbundenen Platten 16 und 17 (Fig. 7) bzw. 18 und 19 (Fig. 8) sind ebenfalls auf Gehrung geschnitten, jedoch beträgt der Gehrungswinkel im Falle der Fig. 7 etwa 120°, während bei Fig. 8 ein rechter Gehrungswinkel vorgesehen ist. Aus diesem Grunde ist der bzw. sind die Eckverbinder bei der Eckverbindung nach Fig. 7 stärker aufgespreizt als bei der Eckverbindung gemäß Fig. 8.

Die beiden Bolzenschäfte 20 und 21, die, wie beim Ausführungsbeispiel, gegen das freie Ende hin konisch zulaufen können, sind erfindungsgemäß um eine sich quer zu ihren Längsachsen erstreckende Drehhächse 22 gelenkig miteinander verbunden. Die Drehachse 22 besitzt eine Bolzenform und ihre geometrische Achse verläuft senkrecht zu den Längsachsen der beiden Bolzenschäfte 20 und 21. Sie ist länger als der Durchmesser bzw. die Dicke der beiden Bolzenschäfte, so daß beide Enden nach außen überstehen. Diese beiden überstehenden Bolzenenden bilden jeweils den Anschlag 23 bzw. 24 im Eckbereich. Weil diese beiden Enden plattgedrückt sind, entsteht jeweils ein plattenförmiger, spatelartiger Anschlag. Die Verbreiterung bewirkt gleichzeitig eine axiale Sicherung des Bolzens bzw. der Drehachse in den Lagerbohrungen der beiden Bolzenschäfte. Diese drehbare Lagerung der Drehachse ist notwendig, damit sich die Anschläge jeweils an die Plattenkanten bzw. Gehrungsflächen 25 und 26 flach anlegen können. Demnach ist also dieser Eckverbinder selbstausrichtend.

Der eine Bolzenschaft 21 besitzt eine mittige innere Lageröse 27, während der andere Bolzenschaft 20 zwei im Abstand voreinander angeordneten äußere Lagerösen 28 und 29 aufweist. Deren Abstand entspricht der Dicke der inneren Lageröse, wie Fig. 5 der Zeichnung deutlich zeigt. Diese Lagerösen sind an ihrem Schaft jeweils einstückig angeformt.

Während beim Ausführungsbeispiel der Fig. 1 ein Anzugskopf 12 separat gefertigt und in ein Innengewinde 14 am Ende des Bolzenschafts 10 eingeschraubt ist und der Bolzenschaft 9 keinen derartigen Anzugskopf aufweist, sind beim Ausführungsbeispiel der zweiten Ausführungsform der Erfindung an beiden Enden der Bolzenschäfte 20 und 21 je ein Anzugskopf 30 bzw. 31 vorgesehen. Dieser Anzugskopf ist mit seinem ihn tragenden Hals einstückig mit dem Bolzenschaft 20 bzw. 27 gefertigt. Jeder Anzugskopf 30, 31 arbeitet, ebenso wie beim Ausführungsbeispiel der Fig. 1, mit einem Spannelement 32 bzw. 33 zusammen, das in eine senkrecht zur Ebene der Platte 16, 17 bzw. 18, 19 eingebrachte Bohrung eingesteckt ist, die sich senkrecht zur Aufnahmebohrung für den Bolzenschaft 20 bzw. 21 erstreckt.

## Patentansprüche

1. Eckverbinder (4) für zwei im Winkel zueinander angeordnete, an ihren einander zugeordneten Kanten (3, 5) auf Gehrung gearbeitete Platten (1, 2), bestehend aus einem abgewinkelten Bolzen mit an seinen Enden angebrachten Haltemitteln (11, 12) für die Platten, gekennzeichnet durch mindestens einen Anschlag (6) im Eckbereich.

2. Eckverbinder für zwei im Winkel zueinander angeordnete, an ihren einander zugeordneten Kanten (3) auf Gehrung gearbeitete Platten (16, 17; 18, 19), bestehend aus einem abgewinkelten Bolzen mit an seinen angebrachten Haltemitteln (30, 31) für die Platten wobei die beiden Bolzenschäfte (20, 21) über ein Drehgelenk (22, 27, 28, 29) miteinander verbunden sind und sich die Drehachse (22) quer zu den Längsachsen der Bolzenschäfte (21, 22) erstreckt, gekennzeichnet durch mindestens einen Anschlag (23, 24) im Eckbereich.

3. Eckverbinder nach Anspruch 1 und 2, dadurch gekennzeichnet, daß der Anschlag (6; 23, 24) in einem dem Gehrungswinkel (3) der Platten (1, 2; 16, 17; 18, 19) entsprechenden Winkel zu den Bolzenschäften (9, 10; 20, 21) angeordnet ist.

4. Eckverbinder nach Anspruch 1, dadurch gekennzeichnet, daß der Anschlag (6) den Eckverbinder (4) im Eckbereich (3, 5) ringförmig umgibt.

5. Eckverbinder nach Anspruch 1, dadurch gekennzeichnet, daß der Anschlag (6) sternförmig ausgebildet ist.

6. Eckverbinder nach Anspruch 5, dadurch gekennzeichnet, daß die Zacken (7) des sternförmigen Anschlages (6) lanzenspitzenförmig, insbesondere mit konvexen Breitflächen (8), ausgebildet sind.

7. Eckverbinder nach mindestens einem der vorhergehenden Ansprüche, dadurch gekennzeichnet, daß sich der Bolzenschaft (9, 10; 20, 21) vom Eckbereich (5) ausgehend nach beiden Seiten verjüngt.

8. Eckverbinder nach wenigstens einem der vorhergehenden Ansprüche, dadurch gekennzeichnet, daß das Ende mindestens eines Blozenschaftes (9, 10; 20, 21) einen, insbesondere in ein Innengewinde (14) eingeschraubten, Anzugskopf (12; 30, 31) aufweist.

9. Eckverbinder nach wenigstens einem der Ansprüche 1 bis 7, dadurch gekennzeichnet, daß das Ende mindestens eines Bolzenenschaftes (9, 10; 20, 21) als Einschlagschaft mit Widerhaken (11) ausgebildet ist.

10. Eckverbinder nach wenigstens einem der Ansprüche 1 und 3 bis 9, dadurch gekennzeichnet, daß die Bolzenschäfte (9, 10) und der Anschlag (6) einstückig gefertigt sind.

11. Eckverbinder nach wenigstens einem der Ansprüche 2, 3 und 7 bis 10, dadurch gekennzeichnet, daß die beiden Enden de Drehachse (22) die Bolzenschäfte (20, 21) überragen und die überstehenden Bolzenenden jeweils als Anschlag (23, 24) im Eckbereich ausgebildet sind.

12. Eckverbinder nach Anspruch 11, dadurch gekennzeichnet, daß die beiden Enden (23, 24) der Drehachse (22) plattenförmig gestaltet sind.

## Claims

1. Corner connector (4) for two panels (1, 2) mitred at their associated edges (3, 5) and disposed at an angle to each other, the corner connector (4) consisting of an angled-over bolt having at its ends retaining means (11, 12) for the panels, characterized by at least one abutment (6) in the corner zone.

2. A corner connector for two panels (16, 17; 18, 19) mitred at their associated edges (3) and disposed at an angle to each other, the corner connector consisting of an angled-over bolt comprising, mounted at its ends, retaining means (30, 31) for the panels, the two bolt shanks (20, 21) being connected to each other by a swivel joint (22, 27, 28, 29), the axis of rotation (22) extending trasversely of the longitudinal axes of the bolt shanks (21, 22), characterized by at least one abutment (23, 24) in the corner zone.

3. A corner connector according to Claim 1 and 2, characterized in that the abutment (6; 23, 24) is disposed at an angle to the bolt shanks (9, 10; 20, 21) which corresponds to the angle (3) of mitre of the panels (1, 2; 16, 17; 18, 19).

4. A corner connector according to Claim 1, characterized in that the abutment (6) engages annularly around the corner zone (3, 5) of the corner connector (4).

5. A corner accector according to Claim 1, characterized in that the abutment (6) is of stellate construction.

6. A corner connector according to Claim 5, characterized in that the notches (7) of the stellate abutment (6) are lance-tip shaped, having in particular convexly shaped broad sides.

7. A corner connector according to at least one of the preceding Claims, characterized in that the blot shank (9, 10; 20, 21) tapers in both directions starting from the corner zone (5).

8. A corner connector according to at least one of the preceding Claims, characterized in that the end of at least one bolt shank (9, 10; 20, 21) has a tightening head (12; 30, 31) which is screwed particularly into an internal screwthread (14).

9. A corner connector according to at least one of Claims 1 ot 7, characterized in that the end of at least one blot shank (9, 10; 20, 21) is constructed as a knock-in shank with barbs (11).

10. A corner connector according to at least one of Claims 1 and 3 to 9, characterized in that the blot shanks (9, 10) and the abutment (6) are constructed in one piece.

11. A corner connector according to at least one of Claims 2, 3 and 7 to 10, characterized in that the two ends of the spindle (22) project beyond the bolt shanks (20, 21), the projecting bolt ends being in each case constructed in the corner zone as an abutment (23, 24).

12. A corner connector according to Claim 11, characterized in that the two ends (23, 24) of the spindle (22) are of plate-like construction.

**Revendications**

1. Pièce (4) de solidarisation d'angle pour deux panneaux (1, 2) qui sont disposés l'un par rapport à l'autre en en formant un angle et sont façonnés en onglet sur leurs arêtes (3, 5) mutuellement associées, consistant en un boulon coudé muni, à ses extrémités, de moyens (11, 12) de retenue des panneaux, caractérisée par au moins une butée (6) dans la zone d'angle.

2. Pièce de solidarisation d'angle pour deux panneaux (16, 17; 18, 19) qui sont disposés l'un par rapport à l'autre en formant un angle et sont façonnés en onglet sur leurs arétes (3) mutuellement associées, consistant en un boulon coudé muni, à ses extrémités, de moyens rapportés (30, 31) de retenue des panneaux, les deux tiges (20, 21) du boulon étant reliées l'une à l'autre par l'intermédiaire d'une articulation tournante (22, 27, 28, 29), et l'axe de rotation (22) s'étendant perpendiculairement aux axes longitudinaux des tiges (21, 22) du boulon, caractérisée par au moins une butée (23, 24) dans la zone d'angle.

3. Pièce de solidarisation d'angle selon les revendications 1 et 2, caractérisée par le fait què la butée (6; 23, 24) est disposée, par rapport aux tiges (9, 10; 20, 21) du boulon, selon un angle correspondant à l'angle d'onglet (3) des panneaux (1, 2; 16, 17; 18, 19).

4. Pièce de solidarisation d'angle selon la revendication 1, caractérisée par le fait que la butée (6) entoure annulairement cette pièce (4) de solidarisation d'angle dans la zone d'angle (3, 5).

5. Pièce de solidarisation d'angle selon la revendication 1, caractérisée par le fait que la butée (6) est réalisée en forme d'étoile.

6. Pièce de solidarisation d'angle selon la revendication 5, caractérisée par le fait que les dents (7) de la butée (6) en forme d'étoile sont réalisées en forme de pointes de lances, en particulier avec des faces larges (8) convexes.

7. Pièce de solidarisation d'angle selon au moins l'une des revendications précédentes, caractérisée par le fait que la tige (9, 10; 20, 21) du boulon décroît de section vers les deux côtés, à partir de la zone d'angle (5).

8. Pièce de solidarisation d'angle selon au moins l'une des revendications précédentes, caractérisée par le fait que l'extrémité d'au moins une tige (9, 10; 20, 21) du boulon présente une tête de blocage (12; 30, 31) vissée en particulier dans un filetage interne (14).

9. Pièce de solidarisation d'angle selon au moins l'une des revendications 1 à 7, caractérisée par le fait que l'extrémité d'au moins une tige (9, 10; 20, 21) du boulon est réalisée sous la forme d'une tige à enfoncement par percussion, dotée d'ardillons (11).

10. Pièce de solidarisation d'angle selon au moins l'une des revendications 1 et 3 à 9, caractérisée par le fait que les tiges (9, 10) du boulon et la butée (6) sont fabriquées d'un seul tenant.

11. Pièce de solidarisation d'angle selon au moins l'une des revendications 2, 3 et 7 à 10, caractérisée par le fait que les deux extrémités de l'axe de rotation (22) dépassent des tiges (20, 21) du boulon, les extrémités de la cheville en débordement étant réalisées sous la forme d'une butée respective (23, 24) dans la zone d'angle.

12. Pièce de solidarisation d'angle selon la revendication 11, caractérisée par le fait que les deux extrémités (23, 24) de l'axe de rotation (22) sont conçues en forme de plaques.

Fig.1

3  4  10 34  13  12

6

9

5  14  15  2

11

1

Fig.2

Fig.3

7

8

III

7

8

Fig. 4

Fig. 5

Fig. 6

Fig. 7

Fig. 8